# EUROPEAN PATENT APPLICATION

(11) **EP 4 693 485 A1**
(43) Date of publication of application: **11.02.2026**
(21) Application number: 23932469.2
(22) Date of filing: 13.04.2023
(51) Int. Cl.: H01M 4/52

(54) **POSITIVE ELECTRODE ACTIVE MATERIAL, POSITIVE ELECTRODE SLURRY, POSITIVE ELECTRODE SHEET, BATTERY, AND ELECTRIC DEVICE**

(71) Applicant: Contemporary Amperex Technology Co., Limited, Ningde, Fujian 352100 (CN)
(72) Inventor: JIN, Haizu, Ningde, Fujian 352100 (CN); SHANG, Yibo, Ningde, Fujian 352100 (CN); YE, Yonghuang, Ningde, Fujian 352100 (CN); XU, Xiaofu, Ningde, Fujian 352100 (CN); HE, Jianfu, Ningde, Fujian 352100 (CN)
(74) Representative: Gong, Jinping
(86) International application number: PCT/CN2023/088145
(87) International publication number: WO 2024/212182

(57) **Abstract**

The present application discloses a positive electrode active material, a positive electrode slurry, a positive electrode plate, a battery, and an electrical apparatus, wherein the positive electrode active material comprises: a first positive electrode active material comprising lithium manganese phosphate; a second positive electrode active material different from the first positive electrode active material, wherein the lithium manganese phosphate has a doping element satisfying at least one of the following conditions: the ion radius of the doping element and the ion radius of manganese element satisfy that |a-b|/b is not greater than 10%, wherein a is the ionic radius of the doping element, and b is the ion radius of manganese element; the valence variation voltage of the doping element is U, and 2V<U<5.5V; the chemical activity of the chemical bond formed by the doping element and O is not less than the chemical activity of P-O bond; and the highest valence of the doping element is not greater than 6.

## Description

### TECHNICAL FIELD

The present disclosure relates to the field of batteries, and particularly relates to a positive electrode active material, a positive electrode slurry, a positive electrode plate, a battery, and an electrical apparatus.

### BACKGROUND

With the development of lithium-ion battery technology, lithium-ion batteries are widely used in energy storage power systems such as hydropower, fire power, wind power and solar power stations due to their high energy density, long cycle life and environmental friendliness, and also have extensive applications in multiple fields such as electric tools, electric bicycles, electric motorcycles, electric vehicles, military equipment, aerospace and others. As positive electrode active materials of lithium-ion batteries, each of which has its own advantages and disadvantages. With the deepening of cognition and research, how to utilize the respective advantages of the positive electrode active materials to improve the performance and stability of lithium-ion batteries has also begun to draw attention. At present, there are still many problems to be solved in the industrial production and application of lithium-ion batteries.

### SUMMARY

In a first aspect of the present application, a positive electrode active material is proposed, comprising: a first positive electrode active material comprising lithium manganese phosphate; a second positive electrode active material different from the first positive electrode active material, wherein the lithium manganese phosphate has a doping element satisfying at least one of the following conditions: the ion radius of the doping element and the ion radius of the manganese element satisfy that |a-b|/b is not greater than 10%, wherein a is the ionic radius of the doping element, and b is the ion radius of the manganese element; the valence variation voltage of the doping element is U, and 2V<U<5.5V; the chemical activity of the chemical bond formed by the doping element and O is not less than the chemical activity of P-O bond; and the highest valence of the doping element is not greater than 6. Thus, a positive electrode active material obtained by mixing different particles has a higher gram capacity and a better cycling performance.

According to an embodiment of the present application, the gram capacity of the second positive electrode active material is not less than the gram capacity of the first positive electrode active material. Thus, the gram capacity of the positive electrode active material can be increased.

According to an embodiment of the present application, the gram capacity of the first positive electrode active material is 135 mAh/g-150 mAh/g, and the gram capacity of the second positive electrode active material is 170 mAh/g-230 mAh/g. Thus, the gram capacity of the positive electrode active material can be further increased.

According to an embodiment of the present application, the discharge voltage plateau of the positive electrode active material is not greater than the discharge voltage plateau of the second positive electrode active material. Thus, the structural stability of the positive electrode active material during cycling can be improved.

According to an embodiment of the present application, the discharge voltage plateau of the first positive electrode active material is not greater than the discharge voltage plateau of the second positive electrode active material. Thus, the structural stability of the positive electrode active material during cycling can be further improved.

According to an embodiment of the present application, the discharge voltage plateau of the first positive electrode active material is 3.70 V-3.80 V, and the discharge voltage plateau of the second positive electrode active material is 3.80 V-3.90 V. Thus, the energy density of the battery can be increased.

According to an embodiment of the present application, under a pressure of 3T, the compacted density of the positive electrode active material is not less than the compacted density of the first positive electrode active material. Thus, the energy density of a battery having the positive electrode active material can be increased.

According to an embodiment of the present application, under a pressure of 3T, the compacted density of the first positive electrode active material is not greater than the compacted density of the second positive electrode active material. Thus, the energy density of a battery having the positive electrode active material can be further increased.

According to an embodiment of the present application, under a pressure of 3T, the compacted density of the first positive electrode active material is 1.8g/cm³-2.5g/cm³; and under a pressure of 3T, the compacted density of the second positive electrode active material is 3.0g/cm³-3.4g/cm³. Thus, the energy density of a battery having the positive electrode active material can be further increased.

According to an embodiment of the present application, at a temperature of 25 °C, the electronic conductivity of the second positive electrode active material is not less than the electronic conductivity of the first positive electrode active material. Thus, the electronic conductivity of the positive electrode active material can be increased, and the internal energy consumption of the positive electrode active material during charging-discharging can be reduced.

According to an embodiment of the present application, the first positive electrode active material is a secondary particle, the Dv50 particle size of the secondary particle of the first positive electrode active material is 2 µm-9 µm, and the Dv50 particle size of the primary particle of the first positive electrode active material is 10 nm-600 nm. Thus, a positive electrode active material with a higher compacted density can be obtained by particle grading.

According to an embodiment of the present application, the first positive electrode active material is a primary particle, and the Dv50 particle size of the primary particle of the first positive electrode active material is 500 nm-1200 nm. Thus, a positive electrode active material with a higher compacted density can be obtained by particle grading.

According to an embodiment of the present application, the second positive electrode active material is a secondary particle, the Dv50 particle size of the secondary particle of the second positive electrode active material is 7 µm-11 µm, and the Dv50 particle size of the primary particle of the second positive electrode active material is 50 nm-800 nm. Thus, a positive electrode active material with a higher compacted density can be obtained by particle grading.

According to an embodiment of the present application, the second positive electrode active material is a primary particle, and the Dv50 particle size of the primary particle of the second positive electrode active material is 3000 nm-5000 nm. Thus, a positive electrode active material with a higher compacted density can be obtained by particle grading.

According to an embodiment of the present application, the mass fraction of the first positive electrode active material in the positive electrode active material is 10 wt%-90 wt%. Thus, the structural stability of the positive electrode active material can be improved, and the manufacturing cost can be reduced.

According to an embodiment of the present application, the mass fraction of the second positive electrode active material in the positive electrode active material is 10 wt%-90 wt%. Thus, the gram capacity of the positive electrode active material can be increased.

According to an embodiment of the present application, the Dv90 particle size of the positive electrode active material is 0.9 µm-8 µm, and the Dv10 particle size of the positive electrode active material is 0.2 µm-3.0 µm. Thus, a positive electrode active material with a higher gram capacity can be obtained.

According to an embodiment of the present application, the Dv90 particle size of the positive electrode active material is 0.9 µm-18 µm, and the Dv10 particle size of the positive electrode active material is 0.2 µm-7.0 µm. Thus, a positive electrode active material with better structural stability, better cycle life and lower manufacturing cost can be obtained.

According to an embodiment of the present application, the Dv50 particle size of the positive electrode active material is 0.5 µm-10 µm. Thus, a positive electrode active material with higher gram capacity, better structural stability, better cycle life and lower manufacturing cost can be obtained.

According to an embodiment of the present application, the mass fraction of the manganese element in the positive electrode active material is 10 wt%-21 wt%. Thus, the manufacturing cost of the positive electrode active material can be further reduced.

According to an embodiment of the present application, the ratio of the mass fraction of the manganese element to the mass fraction of cobalt element in the positive electrode active material is (10:5)-(21:0.4). It is thus helpful to improve the structural stability and conductivity of the positive electrode active material.

According to an embodiment of the present application, the ratio of the mass fraction of manganese element to the mass fraction of nickel element in the positive electrode active material is (10:30)-(21:6). It is thus helpful to improve the gram capacity of the positive electrode active material.

According to an embodiment of the present application, the ratio of the mass fraction of manganese element to the mass fraction of iron element in the positive electrode active material is (10:13)-(21:0.8). It is thus helpful to improve the structural stability of the positive electrode active material and reduce the manufacturing cost.

According to an embodiment of the present application, the ratio of the mass fraction of the manganese element to the mass fraction of the iron element in the first positive electrode active material is (6:4)-(7:3). It is thus helpful to improve the structural stability of the positive electrode active material and reduce the production and manufacturing cost.

According to an embodiment of the present application, the doping element comprises one or two of a first doping element and a second doping element, the first doping element is doped at the manganese site, and the second doping element is doped at the phosphorus site, wherein the first doping element satisfies at least one of the following conditions: the ionic radius of the first doping element and the ionic radius of the manganese element satisfy that |a-b|/b is not greater than 10%, wherein a is the ionic radius of the first doping element, and b is the ionic radius of the manganese element; the valence variation voltage of the first doping element is U, and 2V<U<5.5V, wherein the second doping element satisfies at least one of the following conditions: the chemical activity of the chemical bond formed by the second doping element and O is not less than the chemical activity of P-O bond; and the highest valence of the second doping element is not greater than 6. Thus, the conductivity and gram capacity of the first positive electrode active material can be improved by the doping elements, and the disadvantages of its poor stability and cycle life can be improved or even overcome to some extent.

According to an embodiment of the present application, at least two of the first doping elements are contained. Thus, the conductivity and gram capacity of the first positive electrode active material can be further improved.

According to an embodiment of the present application, the first doping element comprises one or more elements of Zn, Al, Na, K, Mg, Mo, W, Ti, V, Zr, Fe, Ni, Co, Ga, Sn, Sb, Nb and Ge. Thus, the lattice change rate of the first positive electrode active material can be further reduced, and the surface activity of the first positive electrode active material can be reduced, thereby inhibiting Mn elution and the interfacial side reactions between the positive electrode active material and an electrolyte solution.

According to an embodiment of the present application, the second doping element comprises one or more elements of B (Boron), S, Si and N. Thus, the change rate of the Mn-O bond can be increased, the small polaron migration barrier of the first positive electrode active material can be improved, and the electronic conductivity can be improved.

According to an embodiment of the present application, the second positive electrode active material comprises at least one of optionally doped lithium cobalt oxide, optionally doped lithium manganate, optionally doped nickel-cobalt ternary material and optionally doped lithium iron phosphate. Thus, the gram capacity of the positive electrode active material can be further increased.

According to an embodiment of the present application, the lithium cobalt oxide satisfies the general formula Li_{1+z}Co_{1-x-y}MaₓMb_{y}O₂, wherein 0≤x≤0.01, 0≤y≤0.01, and -0.05≤z≤0.08; the Ma comprises a doped constant valence element, and the Ma comprises at least one of Al, Ga, Hf, Mg, Sn, Zn and Zr; the Mb comprises a doped variable valence element, and the Mb comprises at least one of Ni, Mn, V, Mo, Nb, Cu, Fe, In, W and Cr. Thus, the discharge voltage plateau, cycle life, and rate performance of the positive electrode active material can be improved.

According to an embodiment of the present application, the lithium manganate satisfies the general formula LiₐMn_{2-b}M_{b}O_{4-c}X_{c}, wherein 0.9≤a≤1.2, 0≤b≤0.2, and 0≤c≤0.2; M and X are doping elements, M comprises at least one of Li, Cr, Co, Ni, Mg, Ca, Sr, Ba, Na, K, Al, Be, B, Ti, Zr, Cu, Zn, Ga, Sn or V; and the doping element X comprises at least one of F, Cl, Br, I or S. Thus, the gram capacity and cycle life of the positive electrode active material can be improved.

According to an embodiment of the present application, the nickel-cobalt ternary material satisfies the general formula LiₐNi_{b}Co_{c}M1_{d}M2ₑOrR_{g}, wherein 0.75≤a≤1.2, 0<b<1, 0<c<1, 0<d<1, 0≤e≤0.2, 1≤f≤2.5, 0≤g≤1, and f+g≤3; M1 is Mn and/or Al, M2 comprises at least one of Zr, Zn, Cu, Cr, Mg, Fe, V, Ti, Sr, Sb, Y, W and Nb, and R comprises at least one of N, F, S and Cl. Thus, the gram capacity and cycle life of the positive electrode active material can be improved.

According to an embodiment of the present application, the lithium iron phosphate satisfies the general formula LiFeₐM_{b}PO₄, wherein 0.2≤a<1, and 0<b≤0.8; and M comprises one of Ti, Mg, V, Mn, Cr, Zr, Nb and W. Thus, the cycle life of the positive electrode active material can be improved.

According to an embodiment of the present application, the energy density of a film layer formed when the positive electrode active material is provided on the surface of a positive electrode current collector is not less than the energy density of a film layer formed when the first positive electrode active material is provided on the surface of the positive electrode current collector. Thus, a battery containing the aforementioned positive electrode active material has a higher energy density.

In a second aspect of the present application, a positive electrode slurry is proposed, comprising the aforementioned positive electrode active material. Thus, the positive electrode slurry has all the features and advantages of the aforementioned positive electrode active material, which will not be described in detail here.

In a third aspect of the present application, a positive electrode plate is proposed, comprising: a positive electrode current collector and a positive electrode active material layer located on at least one side surface of the positive electrode current collector, wherein the positive electrode active material layer comprises the aforementioned positive electrode active material, and/or the positive electrode active material layer is formed by using the aforementioned positive electrode slurry. Thus, the positive electrode plate has all the features and advantages of the aforementioned positive electrode active material and the aforementioned positive electrode slurry, which will not be described in detail here.

According to an embodiment of the present application, the mass fraction of the manganese element in the positive electrode active material layer is 10 wt%-21 wt%. Thus, the structural stability of the positive electrode active material can be improved, and the manufacturing cost can be reduced.

According to an embodiment of the present application, the ratio of the mass fraction of manganese element to the mass fraction of cobalt element in the positive electrode active material layer is (10:5)-(21:0.4). It is thus helpful to reduce the film resistivity of the positive electrode plate.

According to an embodiment of the present application, the ratio of the mass fraction of manganese element to the mass fraction of nickel element in the positive electrode active material layer is (10:30)-(21:6). It is thus helpful to increase the energy density of the positive electrode plate.

According to an embodiment of the present application, the ratio of the mass fraction of manganese element to the mass fraction of iron element in the positive electrode active material layer is (10:13)-(21:0.8). It is thus helpful to improve the cycling performance of the positive electrode plate.

According to an embodiment of the present application, a region with an area of 1×10⁻⁴cm² is included, the region is located on one side surface of the positive electrode active material layer away from the positive electrode current collector, and the amount of the first positive electrode active material within the region is not less than the amount of the second positive electrode active material. Thus, the energy density and cycle life of the positive electrode plate can be improved.

In a fourth aspect of the present application, a battery is proposed, comprising the aforementioned positive electrode active material, and/or the aforementioned positive electrode plate. Thus, the battery has all the features and advantages of the aforementioned positive electrode active material and the aforementioned positive electrode plate, which will not be described in detail here.

In a fifth aspect of the present application, an electrical apparatus is proposed, comprising the aforementioned positive electrode active material, and/or the aforementioned positive electrode plate, and/or the aforementioned battery. Thus, the electrical apparatus has all the features and advantages of the aforementioned positive electrode active material, the aforementioned positive electrode plate and the aforementioned battery, which will not be described in detail here.

### DESCRIPTION OF DRAWINGS

The above and/or additional aspects and advantages of the present application will become apparent and easily understood from the description of the embodiments in conjunction with the drawings below, in which:
FIG. 1 is a schematic view of a battery according to an embodiment of the present application;
FIG. 2 is an exploded view of the battery of an embodiment of the present application shown in FIG. 1;
FIG. 3 is a schematic view of a battery module according to an embodiment of the present application;
FIG. 4 is a schematic view of a battery pack according to an embodiment of the present application;
FIG. 5 is an exploded view of the battery pack of an embodiment of the present application shown in FIG. 4; and
FIG. 6 is a schematic view of an electrical apparatus in which a battery according to an embodiment of the present application is used as a power source.

### DETAILED DESCRIPTION

The embodiments of the present application are described in detail below, and examples of which are shown in the accompanying drawings, in which the same or similar reference numerals throughout denote the same or similar elements or elements having the same or similar functions. The embodiments described below with reference to the accompanying drawings are exemplary and are used only for explaining the present application, and are not to be construed as limiting the present application. Unless otherwise stated, all scientific and technical terms used in the present application have the same meanings as commonly understood by those skilled in the art to which the present application belongs. All patents and public publications referred to in the present application are hereby incorporated by reference in their entirety into the present application. The term "comprising" or "including" is an open-ended expression, that is, it includes what is specified in the present application, but does not exclude what is specified in other aspects.

While lithium manganese phosphate has such advantages as low cost and better thermal runaway resistance, it also has the disadvantages of low gram capacity and fast early cycle attenuation. For example, during the first charging-discharging of a battery cell, the electrolyte solution will undergo a reductive decomposition reaction on the surface of the negative electrode and form a layer of solid electrolyte interphase film (SEI film), the formation of which will consume a large amount of active lithium, resulting in a decrease in the actual energy density of the battery compared to the theoretical calculated value. During the cycling of the battery cell, phenomena such as the cracking and crushing of lithium manganese phosphate particles, the thickening and repair of the SEI film will continuously consume the active lithium, resulting in a significant decrease in the cycle life of the battery. By mixing a first positive electrode active material comprising lithium manganese phosphate with a second positive electrode active material different from the first positive electrode active material, the obtained positive electrode active material has the advantages of both the first positive electrode active material and the second positive electrode active material, so that the positive electrode active material can have higher structural stability, higher gram capacity and lower manufacturing cost, and the battery with the aforementioned positive electrode active material can balance higher energy density, better cycle life and lower manufacturing cost.

In a first aspect of the present application, a positive electrode active material is proposed, comprising: a first positive electrode active material comprising lithium manganese phosphate; a second positive electrode active material different from the first positive electrode active material, wherein the lithium manganese phosphate has a doping element satisfying at least one of the following conditions: the ion radius of the doping element and the ion radius of the manganese element satisfy that |a-b|/b is not greater than 10%, wherein a is the ionic radius of the doping element, and b is the ion radius of the manganese element; the valence variation voltage of the doping element is U, and 2V<U<5.5V; the chemical activity of the chemical bond formed by the doping element and O is not less than the chemical activity of P-O bond; and the highest valence of the doping element is not greater than 6.

According to the present application, by the above doping scheme of doping non-Mn elements in lithium manganese phosphate, at least one of the following effects can be achieved: 1) reducing the lattice change rate of the first positive electrode active material, so as to reduce the lattice constant difference between the two phases at the grain boundary, reduce the interfacial stress, and enhance the transportation capacity of Li⁺ at the interface, thereby improving the rate performance of the positive electrode active material; 2) promoting the utilization of the capacity of the first positive electrode active material and increasing the battery capacity; 3) making the bond length change rate of the Mn-O bond faster, reducing the small polaron migration barrier of the first positive electrode active material, thereby increasing the electronic conductivity; 4) reducing the activity of oxygen on the surface of the first positive electrode active material, thereby inhibiting Mn elution and reducing the interfacial side reactions between the positive electrode active material and the electrolyte solution; 5) reducing the concentration of antisite defects in the material, improving the kinetic performance and gram capacity of the positive electrode active material; and 6) changing the morphology of the first positive electrode active material, thereby increasing the compacted density.

In the present application, by mixing the second positive electrode active material with the first positive electrode active material, the positive electrode active material has the advantages of the first positive electrode active material and also the advantages of the second positive electrode active material at the same time. For example, when the second positive electrode active material and the first positive electrode active material are of different material types, the positive electrode active material can have higher gram capacity and better structural stability; and when the second positive electrode active material and the first positive electrode active material have different particle sizes, by grading the particle sizes of the second positive electrode active material and the first positive electrode active material, a positive electrode active material with lower manufacturing cost, a positive electrode active material layer with higher compacted density, and a battery with higher energy density can be obtained. By using a positive electrode active material obtained through mixing two types of particles, the battery can balance higher energy density, better cycle life and lower manufacturing cost.

According to some embodiments of the present application, the gram capacity of the second positive electrode active material may be no less than the gram capacity of the first positive electrode active material, and by mixing the second positive electrode active material with a gram capacity greater than or equal to that of the first positive electrode active material with the first positive electrode active material, the positive electrode active material can have higher gram capacity while having better structural stability and lower manufacturing cost.

According to some embodiments of the present application, the gram capacity of the first positive electrode active material may be 135 mAh/g-150 mAh/g.

In some embodiments, the gram capacity of the first positive electrode active material may be 135 mAh/g, 136 mAh/g, 137 mAh/g, 138 mAh/g, 139 mAh/g, 140 mAh/g, 141 mAh/g, 142 mAh/g, 143 mAh/g, 144 mAh/g, 145 mAh/g, 146 mAh/g, 147 mAh/g, 148 mAh/g, 149 mAh/g or 150 mAh/g.

According to some embodiments of the present application, the gram capacity of the second positive electrode active material may be 170 mAh/g-230 mAh/g.

In some embodiments, the gram capacity of the second positive electrode active material may be 170 mAh/g, 175 mAh/g, 180 mAh/g, 185 mAh/g, 190 mAh/g, 195 mAh/g, 200 mAh/g, 205 mAh/g, 210 mAh/g, 215 mAh/g, 220 mAh/g, 225 mAh/g or 230 mAh/g.

As an example, the gram capacity can be tested with reference to the following method: the positive electrode active material to be tested is assembled into a button battery for testing, the button battery is charged to 4.3 V at 0.1 C, and then charged at a constant voltage of 4.3 V, until the current is less than or equal to 0.05 mA, left standing for 5 minutes, and then discharged to 2.0 V at 0.1 C, and the discharge capacity at this time is the gram capacity.

As an example, the assembly of a button battery can refer to the following method: (1) preparation of positive electrode plate: a positive electrode active material, polyvinylidene fluoride (PVDF) and conductive carbon are added to a certain amount of N-methylpyrrolidone (NMP), with the mass ratio of the positive electrode active material : binder : conductive agent being 90 : 5 : 5, stirred in a drying room to form a uniform positive electrode slurry, and the viscosity is controlled to be 3000Pa·S-10000mPa·S; the above positive electrode slurry is coated on an aluminum foil, and after drying, a positive electrode plate is produced, and the positive electrode plate is punched into a round disc with a radius of 7 mm by a punching machine for later use; (2) preparation of negative electrode plate: a lithium metal sheet with a radius of 8 mm and a thickness of 0.6 mm is selected as a negative electrode current collector; (3) preparation of electrolyte solution: a mixed solution of 1 mol/L LiPF₆ solution and 5 wt.% fluoroethylene carbonate (FEC) is used as the electrolyte solution, wherein the solvent of the LiPF₆ solution is ethylene carbonate (EC) : diethyl carbonate (DEC) : dimethyl carbonate (DMC) in a volume ratio of 1 : 1 : 1; (4) button battery assembly: the assembly process needs to be operated in a glove box under an inert atmosphere, a CR2032-type battery case is selected, with the opening of a positive electrode case facing upward and placed flat on a glass plate; a spacer and the positive electrode plate are placed in the positive electrode case in turn with an insulating tweezer, with the positive electrode plate being located in the center of the positive electrode case; 10 µl of electrolyte solution is drawn by a pipette and added dropwise on the surface of the positive electrode plate to wet the positive electrode plate, a separator (with a radius of 9.5 mm and a thickness of 14 µm, PE material + double-sided ceramic coating) is picked up to cover the positive electrode plate, and 10 µl of electrolyte solution is drawn by a pipette and added dropwise on the surface of the separator; a lithium sheet is picked up and placed at the center of the separator, a spacer is picked up and placed at the center of the lithium sheet, a spring leaf is picked up and placed on the spacer and aligned strictly, and a negative electrode case is picked up with the opening facing downward for covering; an insulating tweezer is used to place the button battery with the negative electrode side facing upward on the mold of a button battery sealing machine, and the pressure is adjusted to 800 Pa to press for 5s to complete the assembly of the button battery; and the outer shell of the button battery is wiped clean with a paper towel for testing.

According to some embodiments of the present application, the charging-discharging plateaus of the first positive electrode active material and the second positive electrode active material with different discharge voltage plateaus can complement each other and produce a synergistic effect, so that the ion conduction performance and the electron conduction performance of the positive electrode plate can be better matched, the lithium ion solid phase diffusion coefficient and the resistance of the positive electrode plate are both within an optimal range, and the rate performance of the battery is significantly improved. For example, the discharge voltage plateau of the positive electrode active material may be no greater than the discharge voltage plateau of the second positive electrode active material, so that the structural stability of the positive electrode active material during cycling can be significantly improved.

According to some embodiments of the present application, when the discharge voltage plateau of the first positive electrode active material is not greater than the discharge voltage plateau of the second positive electrode active material, the discharge voltage plateau of the positive electrode active material can be made less than or equal to the discharge voltage plateau of the second positive electrode active material.

According to some embodiments of the present application, the discharge voltage plateau of the first positive electrode active material may be 3.70 V-3.80 V.

In some embodiments, the discharge voltage plateau of the first positive electrode active material may be 3.70 V, 3.71 V, 3.72 V, 3.73 V, 3.74 V, 3.75 V, 3.76 V, 3.77 V, 3.78 V, 3.79 V or 3.80 V.

According to some embodiments of the present application, the discharge voltage plateau of the second positive electrode active material may be 3.80 V-3.90 V.

In some embodiments, the discharge voltage plateau of the first positive electrode active material may be 3.80 V, 3.81 V, 3.82 V, 3.83 V, 3.84 V, 3.85 V, 3.86 V, 3.87 V, 3.88 V, 3.89 V or 3.90 V.

As an example, the discharge voltage plateau can be tested with reference to the following method: the positive electrode active material to be tested is assembled into a button battery for gram capacity test, and the discharge voltage plateau can be calculated by the formula: discharge voltage plateau = discharge energy/discharge capacity.

According to some embodiments of the present application, the compacted density is closely related to the energy density, rate performance, internal resistance, cycle life, and the like of the positive electrode plate. In the present application, under a pressure of 3T, the compacted density of the positive electrode active material may be no less than the compacted density of the first positive electrode active material. With the addition of the second positive electrode active material, the voids among the second positive electrode active material in the positive electrode active material layer can be filled with the first positive electrode active material, thereby increasing the compacted density of the positive electrode active material.

According to some embodiments of the present application, the compacted density of the first positive electrode active material and the compacted density of the second positive electrode active material are not particularly limited, for example, under a pressure of 3T, the compacted density of the first positive electrode active material may be no greater than the compacted density of the second positive electrode active material.

According to some embodiments of the present application, under a pressure of 3T, the compacted density of the first positive electrode active material may be 1.8g/cm³-2.5g/cm³. Under a pressure of 3T, the compacted density of the second positive electrode active material may be 3.0g/cm³-3.4g/cm³. When the compacted density of the first positive electrode active material and the compacted density of the second positive electrode active material are within the above ranges, the positive electrode active material particles are in full contact without blocking the ion moving channels, and at the same time, electrons are ensured to have good conductivity and fast ion movement during high current discharging, so that the discharge polarization is reduced, and the discharge voltage plateau is raised.

In some embodiments, under a pressure of 3T, the compacted density of the first positive electrode active material may be 1.8g/cm³, 1.9g/cm³, 2.0g/cm³, 2.1g/cm³, 2.2g/cm³, 2.3g/cm³, 2.4g/cm³ or 2.5g/cm³.

In some embodiments, under a pressure of 3T, the compacted density of the second positive electrode active material may be 3.0g/cm³, 3.1g/cm³, 3.2g/cm³, 3.3g/cm³ or 3.4g/cm³.

As an example, the compacted density can be tested with reference to the following method: 5 g powder is placed in a special compaction mold (American CARVER mold, model 13mm), and then the mold is placed on a compacted density instrument. A pressure of 3T is applied, the thickness of the powder under the pressure (thickness after pressure relief) is read on the device, and the compacted density is calculated by ρ=m/v. The area value used therein is a standard small picture area of 1540.25mm².

According to some embodiments of the present application, at a temperature of 25 °C, the electronic conductivity of the second positive electrode active material is not less than the electronic conductivity of the first positive electrode active material. By adding the second positive electrode active material, the overall electronic conductivity of the positive electrode active material can be effectively improved, so that the positive electrode active material has better conductivity and lower internal resistance.

As an example, the electronic conductivity of the positive electrode active material can be tested by the following method: a clean glass slide with a width of b is taken, and a conductive silver glue is used to successively fix a first/second/third/fourth copper wires (round cross-section with a cross-sectional diameter of 0.1 mm) on the glass slide; the four wires are arranged parallel to one another (the wires are parallel to the width direction of the glass slide); the distance between the first wire and the second wire is equal to the distance between the third wire and the fourth wire, which is 10 mm, and the distance between the second wire and the third wire is 50 mm; one end of each of the four wires is flush with the edge of the glass slide, and the other end extends outside the glass slide; the positive electrode active material and N-methylpyrrolidone are mixed in a mass ratio of 75:25 to form a slurry, which is coated on the above-mentioned glass slide (complete coverage), the coating thickness is controlled to be 0.1 mm, and then the glass slide is placed in a vacuum oven; after drying at 100 °C for 2h, it was taken out, an ammeter is used to test the current I between the first wire and the fourth wire, as well as the voltage U between the second wire and the third wire, and conductivity = (I × 50)/(U × 0.1 × b), with the unit being S/mm.

According to some embodiments of the present application, when the first positive electrode active material is a secondary particle, the Dv50 particle size of the secondary particle of the first positive electrode active material may be 2 µm-9 µm, and the Dv50 particle size of the primary particle of the first positive electrode active material may be 10 nm-600 nm. The size of the first positive electrode active material particles will affect the processing of the positive electrode active material and the compacted density performance of the positive electrode plate. By selecting a first positive electrode active material with an average particle size of the primary particles within the above range, it is possible to effectively reduce the occurrence of the following situations: the particles of the first positive electrode active material agglomerate due to the fact that the average particle size of the primary particles of the first positive electrode active material is too small, so that the dispersion of the first positive electrode active material in the positive electrode slurry is difficult, and more binder is required, resulting in poor brittleness of the electrode sheet; and because the average particle size of the primary particles of the first positive electrode active material particles is too large, the voids among the positive electrode active material particles are larger, the internal resistance is increased, and the compacted density is reduced.

In some embodiments, when the first positive electrode active material is a secondary particle, the Dv50 particle size of the secondary particle of the first positive electrode active material may be 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm or 9 µm, and the Dv50 particle size of the primary particle of the first positive electrode active material may be 10 nm, 20 nm, 50 nm, 80 nm, 100 nm, 150 nm, 200 nm, 250 nm, 300 nm, 350 nm, 400 nm, 450 nm, 500 nm, 550 nm or 600 nm.

According to some embodiments of the present application, when the first positive electrode active material is a primary particle, the Dv50 particle size of the first positive electrode active material may be 500 nm-1200 nm.

In some embodiments, when the first positive electrode active material is a primary particle, the Dv50 particle size of the first positive electrode active material may be 500 nm, 550 nm, 600 nm, 650 nm, 700 nm, 750 nm, 800 nm, 850 nm, 900 nm, 950 nm, 1000 nm, 1050 nm, 1100 nm, 1150 nm or 1200 nm.

According to some embodiments of the present application, when the second positive electrode active material is a secondary particle, the Dv50 particle size of the secondary particle of the second positive electrode active material may be 7 µm-11 µm, and the Dv50 particle size of the primary particle of the second positive electrode active material may be 50 nm-800 nm. By using a positive electrode active material formed by a second positive electrode active material with a particle size slightly greater than that of the first positive electrode active material, the voids among the second positive electrode active material in the positive electrode active material layer can be filled with the first positive electrode active material, thereby increasing the compacted density of the positive electrode active material, and reducing the internal resistance of the positive electrode active material.

In some embodiments, when the second positive electrode active material is a secondary particle, the Dv50 particle size of the secondary particle of the second positive electrode active material may be 7 µm, 7.5 µm, 8 µm, 8.5 µm, 9 µm, 9.5 µm, 10 µm, 10.5 µm or 11 µm, and the Dv50 particle size of the primary particle of the first positive electrode active material may be 50 nm, 70 nm, 90 nm, 100 nm, 150 nm, 200 nm, 250 nm, 300 nm, 350 nm, 400 nm, 450 nm, 500 nm, 550 nm, 600 nm, 650 nm, 700 nm, 750 nm or 800 nm.

According to some embodiments of the present application, when the second positive electrode active material is a primary particle, the Dv50 particle size of the second positive electrode active material is 3000 nm-5000 nm.

In some embodiments, when the second positive electrode active material is a primary particle, the Dv50 particle size of the second positive electrode active material may be 3000 nm, 3200 nm, 3400 nm, 3600 nm, 3800 nm, 4000 nm, 4200 nm, 4400 nm, 4600 nm, 4800 nm or 5000 nm.

According to some embodiments of the present application, the mass fraction of the first positive electrode active material in the positive electrode active material may be 10 wt%-90 wt%. When the mass fraction of the first positive electrode active material in the positive electrode active material is within the above range, the positive electrode active material has higher structural stability and lower manufacturing cost.

In some embodiments, the mass fraction of the first positive electrode active material in the positive electrode active material may be 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt% or 90 wt%.

According to some embodiments of the present application, the mass fraction of the second positive electrode active material in the positive electrode active material may be 10 wt%-90 wt%. When the mass fraction of the second positive electrode active material in the positive electrode active material is within the above range, the positive electrode active material has higher gram capacity.

In some embodiments, the mass fraction of the second positive electrode active material in the positive electrode active material may be 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt% or 90 wt%.

In the present application, the ratio of the first positive electrode active material to the second positive electrode active material in the positive electrode active material will affect the electrical properties such as gram capacity and structural stability of the positive electrode active material. For example, when the content of a certain material in the positive electrode active material is higher, the performance advantages of the material are more obvious in the positive electrode active material.

According to some embodiments of the present application, according to different ratios of the first positive electrode active material to the second positive electrode active material, the particle size range of the positive electrode active material will be fluctuated and adjusted accordingly. For example, when the positive electrode active material contains a greater amount of the second positive electrode active material and a smaller amount of the first positive electrode active material, the Dv90 particle size of the positive electrode active material may be 0.9 µm-8 µm, and the Dv10 particle size of the positive electrode active material may be 0.2 µm-3.0 µm. When the Dv50 particle size difference between the first positive electrode active material and the second positive electrode active material is not less than 2.2 µm, there will be two peaks of the Dv10 particle size in the particle size distribution of the positive electrode active material, which correspond to the particle size of the first positive electrode active material and the particle size of the second positive electrode active material, respectively; and there is a single peak of the Dv90 particle size of the positive electrode active material in the particle size distribution, corresponding to the particle size of the second positive electrode active material. When the Dv50 particle size difference between the first positive electrode active material and the second positive electrode active material is less than 2.2 µm, there is only a single peak of the Dv10 particle size in the particle size distribution of the positive electrode active material, which corresponds to the particle size of the mixed particles after the first positive electrode active material and the second positive electrode active material are mixed, and there is a single peak of the Dv90 particle size of the positive electrode active material in the particle size distribution, corresponding to the particle size of the second positive electrode active material.

According to some embodiments of the present application, when the positive electrode active material contains a smaller amount of the second positive electrode active material and a greater amount of the first positive electrode active material, the Dv90 particle size of the positive electrode active material may be 0.9 µm-18 µm, and the Dv10 particle size of the positive electrode active material may be 0.2 µm-7.0 µm. When the Dv50 particle size difference between the first positive electrode active material and the second positive electrode active material is not less than 2.2 µm, there will be two peaks of the Dv10 particle size in the particle size distribution of the positive electrode active material, which correspond to the particle size of the first positive electrode active material and the particle size of the second positive electrode active material, respectively; and there is a single peak of the Dv90 particle size of the positive electrode active material in the particle size distribution, corresponding to the particle size of the first positive electrode active material. When the Dv50 particle size difference between the first positive electrode active material and the second positive electrode active material is less than 2.2 µm, there is only a single peak of the Dv10 particle size in the particle size distribution of the positive electrode active material, which corresponds to the particle size of the mixed particles after the first positive electrode active material and the second positive electrode active material are mixed, and there is a single peak of the Dv90 particle size of the positive electrode active material in the particle size distribution, corresponding to the particle size of the first positive electrode active material.

According to some embodiments of the present application, when the positive electrode active material contains the second positive electrode active material and the first positive electrode active material in similar amounts, the Dv50 particle size of the positive electrode active material may be 0.5 µm-10 µm. When the Dv50 particle size difference between the first positive electrode active material and the second positive electrode active material is not less than 2.2 µm, there will be two peaks of the Dv50 particle size in the particle size distribution of the positive electrode active material, which correspond to the particle size of the first positive electrode active material and the particle size of the second positive electrode active material, respectively, and the difference between the two peaks is not less than 2.2 µm. When the Dv50 particle size difference between the first positive electrode active material and the second positive electrode active material is less than 2.2 µm, there will be a single peak of the Dv50 particle size in the particle size distribution of the positive electrode active material, corresponding to the particle size of the mixed particles after the first positive electrode active material and the second positive electrode active material are mixed.

The aforementioned Dv90 particle size refers to the particle size when the cumulative volume distribution percentage of the positive electrode active material reaches 90%. The aforementioned Dv50 particle size refers to the particle size when the cumulative volume distribution percentage of the positive electrode active material reaches 50%. The aforementioned Dv10 particle size refers to the particle size when the cumulative volume distribution percentage of the positive electrode active material reaches 10%. In the present application, the Dv90 particle size, Dv50 particle size, and Dv10 particle size of the positive electrode active material can all be measured using laser diffraction particle size analysis. As an example, the particle size of the positive electrode active material can be measured using a laser particle size analyzer (such as Malvern Master Size 3000) with reference to the standard GB/T 19077-2016.

According to some embodiments of the present application, the mass fraction of manganese element in the positive electrode active material may be 10 wt%-21 wt%. When the mass fraction of manganese element in the positive electrode active material is within the aforementioned range, problems such as poor structural stability and reduced density of the positive electrode active material that may be caused if the manganese element content is too large can be effectively avoided, thereby improving the performance of the battery such as cycle, storage and compacted density; and problems such as low discharge voltage plateau that may be caused if the manganese element content is too small can be avoided, thereby improving the energy density of the battery.

In some embodiments, the mass fraction of manganese element in the positive electrode active material may be 10 wt%, 11 wt%, 12 wt%, 13 wt%, 14 wt%, 15 wt%, 16 wt%, 17 wt%, 18 wt%, 19 wt%, 20 wt% or 21 wt%.

According to some embodiments of the present application, the ratio of the mass fraction of manganese element to the mass fraction of cobalt element in the positive electrode active material may be (10:5)-(21:0.4). When the ratio of the mass fraction of manganese element to the mass fraction of cobalt element in the positive electrode active material is within the aforementioned range, the positive electrode active material has not only higher discharge voltage plateau, but also higher structural stability and higher electronic conductivity.

According to some embodiments of the present application, the ratio of the mass fraction of manganese element to the mass fraction of nickel element in the positive electrode active material may be (10:30)-(21:6). When the ratio of the mass fraction of manganese element to the mass fraction of nickel element in the positive electrode active material is within the aforementioned range, the positive electrode active material has not only higher discharge voltage plateau and structural stability, but also higher gram capacity.

According to some embodiments of the present application, the ratio of the mass fraction of manganese element to the mass fraction of iron element in the positive electrode active material may be (10:13)-(21:0.8). When the ratio of the mass fraction of manganese element to the mass fraction of iron element in the positive electrode active material is within the aforementioned range, the positive electrode active material has higher discharge voltage plateau and structural stability, as well as lower manufacturing cost.

According to some embodiments of the present application, the ratio of the mass fraction of manganese element to the mass fraction of iron element in the first positive electrode active material is (6:4)-(7:3). When the ratio of the mass fraction of manganese element to the mass fraction of iron element in the first positive electrode active material is within the aforementioned range, the positive electrode active material has higher discharge voltage plateau and structural stability, as well as lower manufacturing cost.

As an example, the mass fraction of an element in the positive electrode active material can be obtained by measuring with reference to the following method: about 0.2 g of the positive electrode active material is taken and placed in a 30 ml digestion vessel, and a digestion vessel without adding a sample is reserved as a blank sample; the digestion vessel containing the positive chemical material sample is transferred to a fume hood, and 12 ml of inverse aqua regia is added along the inner wall of the digestion vessel, so that the residual sample on the inner wall is flushed to the bottom of the vessel; after that, a top cover, a thermal insulation sleeve, a spacer, a microwave digestion device, and a nut are installed in sequence; a wrench is used to tighten the nut, and then the microwave digester is turned on; an optical fiber sensor in the microwave digester is inserted to reach the bottom of the previously assembled digestion vessel containing the sample; the digestion vessel is placed in the microwave digester in a balanced manner, and then the digestion process is started (the digestion procedure is to raise the temperature in 6 min to 120 °C for 8 min, in 5 min to 160 °C for 8 min, and in 5 min to 180 °C for 5 min); after digestion, the digestion vessel is cooled to room temperature and taken out, and is placed in the fume hood; the nut is slowly unscrewed to release the gas, and then the previously installed parts are removed in sequence; the solution in the digestion vessel is transferred to a 100 ml volumetric flask through a funnel (a filter paper is required), and then the digestion vessel is rinsed with ultrapure water, and the rinse solution is also transferred to the volumetric flask; each rinse uses 10 ml of ultrapure water; the solution in the 100 ml volumetric flask was shaken well, and 1 ml of the well shaken solution is drawn by a pipette and added to another 100 ml volumetric flask, then ultrapure water is added to make up the volume (so that the solution reached a total of 100 ml), and finally, the sample solution is tested by ICP-OES; wherein when formulating inverse aqua regia, 1000 ml of ultrapure water can be poured into a 2500 ml glass bottle, and then 750 ml of concentrated nitric acid and 250 ml of concentrated hydrochloric acid are added in sequence, stirred uniformly for use, wherein the concentrated nitric acid is a concentrated nitric acid solution with a mass fraction of 68%, and the concentrated hydrochloric acid is a concentrated hydrochloric acid solution with a mass fraction of 68%; or alternatively, a hydrogen chloride gas is added to the ultrapure water according to 68% hydrogen chloride gas and 32% ultrapure water respectively by mass proportion, and the required concentrated hydrochloric acid can be obtained after completely dissolved.

In particular, the content of manganese element can be measured by the following method: the positive electrode active material is dissolved in dilute hydrochloric acid (with a concentration of 10-30%), the content of each element in the solution is tested by ICP, and then the content of manganese element is measured and converted to obtain its weight proportion.

According to some embodiments of the present application, the doping elements comprise one or two of a first doping element and a second doping element, the first doping element is doped at the manganese site, and the second doping element is doped at the phosphorus site, and by simultaneously doping at the Mn site and P site of the first positive electrode active material, it is possible to not only effectively reduce manganese elution, thereby reducing manganese ions migrating to the negative electrode, reducing the electrolyte solution consumed due to the decomposition of the SEI film, and improving the cycle life of the battery, but also promote the adjustment of Mn-O bond, reduce the lithium ion migration barrier, promote lithium ion migration, and improve the rate performance of the battery.

According to some embodiments of the present application, when the first doping element is doped at manganese site, the first doping element may satisfy at least one of the following conditions: the ionic radius of the first doping element and the ionic radius of manganese element satisfy that |a-b|/b is not greater than 10%, wherein a is the ionic radius of the first doping element, b is the ionic radius of manganese element; the valence variation voltage of the first doping element is U, and 2V<U<5.5V. Further, the ionic radius of the first doping element and the ionic radius of manganese element may satisfy that |a-b|/b is not greater than 5%. Selecting an appropriate Mn site doping element can improve the lattice change rate of lithium manganese phosphate during the lithium deintercalation process of the material, improve the structural stability of the positive electrode active material, effectively reduce the dissolution of manganese, and reduce the oxygen activity on the particle surface, thereby increasing the gram capacity of the positive electrode active material, and reducing the interfacial side reactions between the material and the electrolyte solution during use, thereby improving the cycling performance of the material, and so on. More specifically, by selecting an element with an ionic radius similar to that of Mn element as a doping element at the Mn site, or selecting an element with a valence variable range within the valence variation range of Mn for doping, it is possible to control the variation of the bond length between the doping element and O and the bond length of Mn-O bond, thereby facilitating the stabilization of the lattice structure of the doped positive electrode active material. In addition, a vacancy element that supports the crystal lattice can also be introduced at the Mn site, such as an element whose valence is greater than or equal to the sum of the valences of Li and Mn, which is equivalent to introducing a vacant site that cannot combine with Li at the active and easily eluted Mn site, thereby supporting the crystal lattice.

According to some embodiments of the present application, when the second doping element is doped at phosphorus site, the second doping element may satisfy at least one of the following conditions: the chemical activity of the chemical bond formed between the second doping element and O is not less than the chemical activity of P-O bond; and the highest valence of the second doping element is not greater than 6. Selecting an appropriate P-site doping element can help to change the difficulty of Mn-O bond length change, thereby improving electronic conductivity and reducing lithium ion migration barrier, promoting lithium ion migration, and improving the rate performance of secondary battery. Specifically, the tetrahedral structure of P-O bond itself is relatively stable, which makes it difficult to change the Mn-O bond length, resulting in a higher overall lithium ion migration barrier in the material, and the appropriate P-site doping element can improve the firmness of the tetrahedron of P-O bond, thereby promoting the improvement of the rate performance of the material. Specifically, an element whose chemical activity of the chemical bond formed with O is not less than the chemical activity of P-O bond can be selected for doping at the P site, so that the difficulty of changing the length of the Mn-O bond can be improved. In the present application, unless otherwise specified, "the chemical activity of the chemical bond formed with O is not less than the chemical activity of P-O bond", which can be determined by a test method for determining the activity of a chemical bond well known to those skilled in the art. For example, it can be determined by detecting bond energy, or by reference to the electrochemical potential of an oxidizing or reducing reagent used to break the chemical bond. Alternatively, an element with a valence state not significantly higher than that of P, such as less than 6, may be selected for doping at the P site, which is beneficial to reducing the repulsion of Mn and P elements, and also improving the gram capacity and rate performance of the positive electrode active material.

According to some embodiments of the present application, when the first doping element is doped at manganese site, the first positive electrode active material may contain at least two first doping elements.

According to some embodiments of the present application, the first doping element may comprise one or more elements of Zn, Al, Na, K, Mg, Mo, W, Ti, V, Zr, Fe, Ni, Co, Ga, Sn, Sb, Nb and Ge. By doping two or more metals within the above range, doping at the manganese site is beneficial to enhancing the doping effect, further reducing the surface oxygen activity, and thus inhibiting the manganese elution. Additionally, the doping of multiple elements can increase the synergistic effects among elements, for example, while increasing the battery capacity, the lattice change rate of the material is reduced, and the dynamic performance of the battery is enhanced.

According to some embodiments of the present application, the second doping elements may comprise one or more elements of B (boron), S, Si and N. By doping an element within the above range, it is helpful to reduce the lattice change rate of lithium manganese phosphate in the lithium deintercalation process of the first positive electrode active material, improve the structural stability of the first positive electrode active material, effectively reduce the elution of manganese, and reduce the oxygen activity on the particle surface; and when the elements doped at the phosphorus site comprise the above elements, it is also helpful to change the difficulty of Mn-O bond length change, thereby improving electronic conductivity and reducing lithium ion migration barrier, promoting lithium ion migration, and improving the rate performance of the battery.

According to some embodiments of the present application, the type of the second positive electrode active material is not particularly limited as long as it can achieve complementary advantages with the first positive electrode active material, and for example, the second positive electrode active material may comprise at least one of optionally doped lithium cobalt oxide, optionally doped lithium manganate, optionally doped nickel-cobalt ternary material and optionally doped lithium iron phosphate. When the second positive electrode active material is within the above range, the gram capacity of the positive electrode active material can be effectively improved, and the cycle life of the battery can also be improved.

According to some embodiments of the present application, lithium cobalt oxide satisfies the general formula Li_{1+z}Co_{1-x-y}MaₓMb_{y}O₂, wherein 0≤x≤0.01, 0≤y≤0.01, -0.05≤z≤0.08; Ma comprises a doped constant valence element, and Ma comprises at least one of Al, Ga, Hf, Mg, Sn, Zn and Zr; Mb comprises a doped variable valence element, and Mb comprises at least one of Ni, Mn, V, Mo, Nb, Cu, Fe, In, W and Cr. Lithium cobalt oxide has the advantages of simple synthesis method, long cycle life, high working voltage and good rate performance, and by mixing the first positive electrode active material and the second positive electrode active material, a positive electrode active material with the advantages of both materials can be obtained.

According to some embodiments of the present application, lithium manganate satisfies the general formula LiₐMn_{2-b}M_{b}O_{4-c}X_{c}, wherein 0.9≤a≤1.2, 0≤b≤0.2, and 0≤c≤0.2; M and X are doping elements, M comprises at least one of Li, Cr, Co, Ni, Mg, Ca, Sr, Ba, Na, K, Al, Be, B, Ti, Zr, Cu, Zn, Ga, Sn and V; and the doping element X comprises at least one of F, Cl, Br, I and S. Lithium manganate has lower production and manufacturing cost and better structural stability, and by mixing the first positive electrode active material and the second positive electrode active material, a positive electrode active material with the advantages of both materials can be obtained.

According to some embodiments of the present application, the nickel-cobalt ternary material satisfies the general formula LiₐNi_{b}Co_{c}M1_{d}M2_{c}O_{f}R_{g}, wherein 0.75≤a≤1.2, 0<b<1, 0<c<1, 0<d<1, 0≤e≤0.2, 1≤f≤2.5, 0≤g≤1, and f+g≤3; M1 is Mn and/or Al, M2 comprises at least one of Zr, Zn, Cu, Cr, Mg, Fe, V, Ti, Sr, Sb, Y, W and Nb, and R comprises at least one of N, F, S and Cl. Thus, the gram capacity and structural stability of the positive electrode active material can be improved. The nickel-cobalt ternary material has the advantages of lithium nickelate and lithium cobalt oxide, and by introducing manganese and/or aluminum elements, the manufacturing cost is reduced, and the structural stability is improved. By mixing the first positive electrode active material and the second positive electrode active material, a positive electrode active material with the advantages of both materials can be obtained.

According to some embodiments of the present application, lithium iron phosphate satisfies the general formula LiFeₐM_{b}PO₄, wherein 0.2≤a<1, and 0<b≤0.8; and M comprises one of Ti, Mg, V, Mn, Cr, Zr, Nb and W. Lithium iron phosphate has the advantages of better structural stability, lower manufacturing cost, environmental friendliness and better cycle life, and by mixing the first positive electrode active material and the second positive electrode active material, a positive electrode active material with the advantages of both materials can be obtained.

As an example, an aberration corrected spherical transmission electron microscope (ACSTEM) can be used to characterize the internal microstructure and surface structure of the positive electrode active material with high spatial resolution, and the chemical formula of the positive electrode active material can be obtained by combining with three-dimensional reconstruction technology.

As an example, ICP can be used to confirm the mass fraction of each element, then the mass of each element can be obtained by testing the sample mass by ICP, and then the molar amount can be confirmed by the molar mass of each element, and finally the chemical formula is obtained by calculation.

According to some embodiments of the present application, the energy density of a film layer formed when the positive electrode active material is provided on the surface of a positive electrode current collector is not less than the energy density of a film layer formed when the first positive electrode active material is provided on the surface of the positive electrode current collector. Thus, the positive electrode active material has a higher energy density. After mixing the first positive electrode active material and the second positive electrode active material, the positive electrode active material layer obtained finally has a better energy density.

In a second aspect of the present application, a positive electrode slurry is proposed, comprising the aforementioned positive electrode active material. Thus, the positive electrode slurry has all the features and advantages of the aforementioned positive electrode active material, which will not be described in detail here.

In a third aspect of the present application, a positive electrode plate is proposed, comprising: a positive electrode current collector and a positive electrode active material layer located on at least one side surface of the positive electrode current collector, and the positive electrode active material layer comprises the aforementioned positive electrode active material. Thus, the positive electrode plate has all the features and advantages of the aforementioned positive electrode active material, which will not be described in detail here.

According to some embodiments of the present application, the mass fraction of manganese element in the positive electrode active material layer is not particularly limited, and for example, the mass fraction of manganese element in the positive electrode active material layer may be 10 wt%-21 wt%.

In some embodiments, the mass fraction of manganese element in the positive electrode active material layer may be 10 wt%, 11 wt%, 12 wt%, 13 wt%, 14 wt%, 15 wt%, 16 wt%, 17 wt%, 18 wt%, 19 wt%, 20 wt% or 21 wt%.

According to some embodiments of the present application, the ratio of the mass fraction of manganese element to the mass fraction of cobalt element in the positive electrode active material layer is (10:5)-(21:0.4). It is thus helpful to increase the conductivity of the positive electrode plate.

According to some embodiments of the present application, the ratio of the mass fraction of manganese element to the mass fraction of nickel element in the positive electrode active material layer is (10:30)-(21:6). It is thus helpful to increase the energy density of the positive electrode plate.

According to some embodiments of the present application, the ratio of the mass fraction of manganese element to the mass fraction of iron element in the positive electrode active material layer is (10:13)-(21:0.8). It is thus helpful to improve the cycling performance of the positive electrode plate.

According to some embodiments of the present application, in the present application, there is at least one region with an area of 1 × 10⁻⁴cm² on one side surface of the positive electrode active material layer away from the positive electrode current collector, and the amount of the first positive electrode active material within the region is not less than the amount of the second positive electrode active material. Compared with the second positive electrode active material, the particle size of the first positive electrode active material is smaller, and when the amount of the first positive electrode active material within the region is not less than the amount of the second positive electrode active material, the voids among the second positive electrode active material in the positive electrode active material layer can be filled with the particles of the first positive electrode active material, thereby increasing the compacted density of the positive electrode active material.

In a fourth aspect of the present application, a battery is proposed, comprising the aforementioned positive electrode plate. Thus, the battery has all the features and advantages of the aforementioned positive electrode plate, which will not be described in detail here. Generally, a battery comprises a positive electrode plate, a negative electrode plate, an electrolyte, and a separator. During battery charging-discharging, active ions intercalate and deintercalate between the positive electrode plate and the negative electrode plate. The electrolyte serves to conduct ions between the positive electrode plate and the negative electrode plate. The separator is provided between the positive electrode plate and the negative electrode plate, serving mainly to prevent the positive and negative electrodes from short-circuiting, while allowing ions to pass through.

According to some embodiments of the present application, the positive electrode current collector has two surfaces opposite to each other in its own thickness direction, and the positive electrode active material layer is provided on any one or both of the two opposite surfaces of the positive electrode current collector.

According to some embodiments of the present application, the positive electrode current collector may be a metal foil or a composite current collector. For example, as the metal foil, an aluminum foil may be used. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (a substrate such as polypropylene (PP), polyethylene terephthalate (PET), polybutylene terephthalate (PBT), polystyrene (PS), or polyethylene (PE)).

According to some embodiments of the present application, the positive electrode active material layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluoroacrylate resin.

According to some embodiments of the present application, the positive electrode active material layer further optionally comprises a conductive agent. As an example, the conductive agent may comprise at least one of superconducting carbon, acetylene black, carbon black, Ketjen black, carbon dot, carbon nanotube, graphene, and carbon nanofiber.

According to some embodiments of the present application, the positive electrode plate can be prepared by dispersing the above components for preparing a positive electrode plate, such as the positive electrode active material, the conductive agent, the binder and any other components, in a solvent (such as N-methylpyrrolidone) to form a positive electrode slurry; coating the positive electrode slurry onto the positive electrode current collector; and obtaining the positive electrode plate after drying, cold pressing and other processes.

According to some embodiments of the present application, the negative electrode plate comprises a negative electrode current collector and a negative electrode active material layer provided on at least one surface of the negative electrode current collector, and the negative electrode active material layer comprises a negative electrode active material.

According to some embodiments of the present application, the negative electrode current collector has two surfaces opposite to each other in its own thickness direction, and the negative electrode active material layer is provided on any one or both of the two opposite surfaces of the negative electrode current collector.

According to some embodiments of the present application, the negative electrode current collector may be a metal foil or a composite current collector. For example, as the metal foil, a copper foil can be used. The composite current collector may comprise a polymer material substrate layer and a metal layer formed on at least one surface of the polymer material substrate. The composite current collector may be formed by forming a metal material (such as copper, copper alloy, nickel, nickel alloy, titanium, titanium alloy, silver and silver alloy) on a polymer material substrate (a substrate such as polypropylene (PP), polyethylene terephthalate (PET), polybutylene terephthalate (PBT), polystyrene (PS), or polyethylene (PE)).

According to some embodiments of the present application, the negative electrode active material may be a negative electrode active material well known in the art for batteries. As an example, the negative electrode active material may comprise at least one of the following materials: artificial graphite, natural graphite, soft carbon, hard carbon, a silicon-based material, a tin-based material, lithium titanate, etc. The silicon-based material may comprise at least one of elemental silicon, a silicon-oxygen compound, a silicon-carbon composite, a silicon-nitrogen composite, and a silicon alloy. The tin-based material may comprise at least one of elemental tin, a tin-oxygen compound and a tin alloy. However, the present application is not limited to these materials, and other conventional materials useful as negative electrode active materials for batteries can also be used. These negative electrode active materials may be used alone or in combination of two or more.

According to some embodiments of the present application, the negative electrode active material layer further optionally comprises a binder. The binder may comprise at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

According to some embodiments of the present application, the negative electrode active material layer further optionally comprises a conductive agent. The conductive agent may comprise at least one of superconducting carbon, acetylene black, carbon black, Ketjen black, carbon dot, carbon nanotube, graphene and carbon nanofiber.

According to some embodiments of the present application, the negative electrode active material layer further optionally comprises other auxiliaries, such as a thickener (such as sodium carboxymethyl cellulose (CMC-Na)).

According to some embodiments of the present application, the negative electrode plate can be prepared by dispersing the above components for preparing a negative electrode plate, such as the negative electrode active material, the conductive agent, the binder and any other components, in a solvent (such as deionized water) to form a negative electrode slurry; coating the negative electrode slurry onto the negative electrode current collector; and obtaining the negative electrode plate after drying, cold pressing and other processes.

According to some embodiments of the present application, the electrolyte serves to conduct ions between the positive electrode plate and the negative electrode plate. The type of the electrolyte is not specifically limited in the present application, and can be selected according to requirements. For example, the electrolyte may be in a liquid state, a gel state or an all-solid state.

According to some embodiments of the present application, the electrolyte is an electrolyte solution. The electrolyte solution comprises an electrolyte salt and a solvent.

According to some embodiments of the present application, the electrolyte salt may comprise lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate and lithium tetrafluoro(oxalato)phosphate.

According to some embodiments of the present application, the solvent may comprise ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

According to some embodiments of the present application, the electrolyte solution further optionally comprises an additive. For example, the additive may comprise a negative electrode film-forming additive and a positive electrode film-forming additive, and may further comprise additives that can improve certain properties of the battery, such as an additive that improves the overcharging performance of the battery and an additive that improves the high- or low-temperature performance of the battery.

According to some embodiments of the present application, the battery further comprises a separator. The type of the separator is not particularly limited in the present application, and any well known porous separator with good chemical stability and mechanical stability can be selected.

According to some embodiments of the present application, the material of the separator may comprise at least one of glass fiber, non-woven fabric, polyethylene, polypropylene and polyvinylidene fluoride. The separator may be either a single-layer thin film or a multilayer composite thin film, and is not particularly limited. When the separator is a multilayer composite thin film, the materials of the respective layers may be the same or different, and are not particularly limited.

According to some embodiments of the present application, the positive electrode plate, the negative electrode plate and the separator can be fabricated into an electrode assembly by a winding process or a lamination process.

According to some embodiments of the present application, a secondary battery may comprise an outer package. The outer package can be used to encapsulate the above-mentioned electrode assembly and electrolyte.

According to some embodiments of the present application, the outer package of the secondary battery may be a hard shell, such as a hard plastic shell, an aluminum shell, and a steel shell. The outer package of the battery may also be a soft pack, such as a bag-type soft pack. The material of the soft pack may be plastic, and as the plastics, polypropylene, polybutylene terephthalate, polybutylene succinate and the like can be cited.

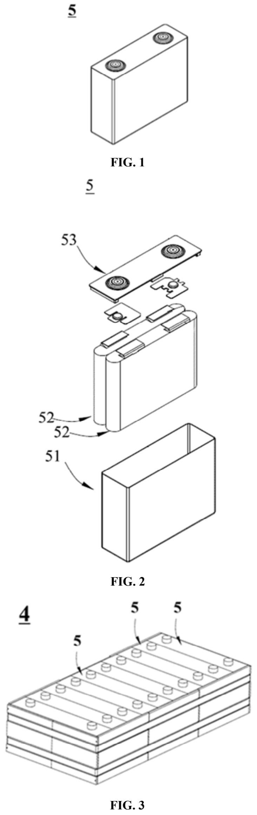

According to some embodiments of the present application, the shape of the battery is not particularly limited in the present application, which may be cylindrical, square or any other shape. For example, FIG. 1 is a battery 5 with a square structure as an example. Specifically, with reference to FIG. 2, the outer package may comprise a case 51 and a cover plate 53. Here, the case 51 may comprise a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator can be wound or laminated to form an electrode assembly 52. The electrode assembly 52 is encapsulated within the accommodating cavity. The electrode assembly 52 is impregnated with an electrolyte solution. The number of electrode assemblies 52 contained in the battery 5 can be one or more, and can be selected by those skilled in the art according to specific actual needs.

According to some embodiments of the present application, batteries can be assembled into a battery module, the number of batteries contained in the battery module may be one or more, and the specific number can be selected by those skilled in the art according to the application and capacity of the battery module. Fig. 3 is a battery module 4 as an example. Referring to FIG. 3, in the battery module 4, a plurality of batteries 5 may be arranged in sequence along the length direction of the battery module 4. Of course, any other arrangements are also possible. The plurality of batteries 5 can further be fixed by fasteners. The battery module 4 may further comprise a housing having an accommodating space in which the plurality of batteries 5 are accommodated.

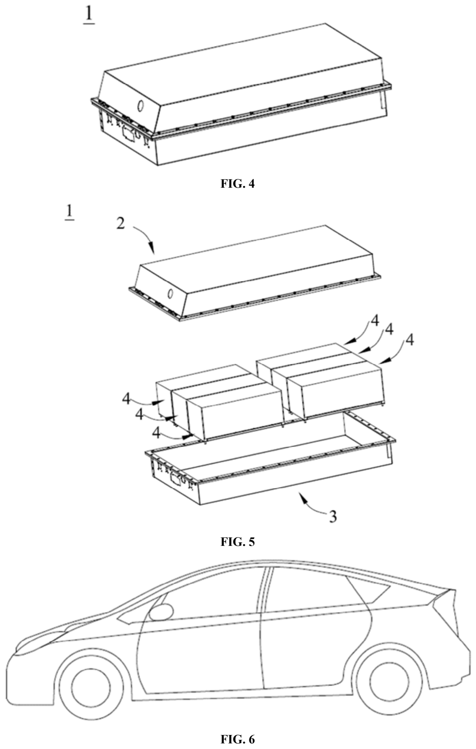

According to some embodiments of the present application, the above battery modules can also be assembled into a battery pack, and the number of battery modules contained in the battery pack may be one or more, and the specific number can be selected by those skilled in the art according to the application and capacity of the battery pack. FIGs. 4 and 5 show a battery pack 1 as an example. Referring to FIGs. 4 and 5, the battery pack 1 may comprise a battery box and a plurality of battery modules 4 provided in the battery box. The battery box comprises an upper box body 2 and a lower box body 3, wherein the upper box body 2 can cover the lower box body 3 to form an enclosed space for accommodating the battery module 4. The plurality of battery modules 4 may be arranged in the battery box in any manner.

In a fifth aspect of the present application, an electrical apparatus is proposed, comprising the aforementioned positive electrode plate and/or the aforementioned battery. Thus, the electrical apparatus has all the features and advantages of the aforementioned battery, which will not be described in detail here. The battery, the battery module, or the battery pack may be used as a power source for the electrical apparatus, and may also be used as an energy storage unit for the electrical apparatus. The electrical apparatus may include, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, or an energy storage system. The electrical apparatus may select the battery, the battery module, or the battery pack according to its usage requirements.

According to some embodiments of the present application, FIG. 6 is an electrical apparatus as an example. The electrical apparatus is an all-electric vehicle, a hybrid electric vehicle, or a plug-in hybrid electric vehicle, etc. In order to meet the requirements of the electrical apparatus for high power and high energy density of the battery, a battery pack or a battery module can be used.

According to some embodiments of the present application, the electrical apparatus may also be a mobile phone, a tablet, a laptop, etc. The apparatus is generally required to be light and thin, and a battery can be used as a power source.

The solution of the present application will be described below through specific examples, and it is to be noted that the following examples are only used for illustrating the present application, and should not be regarded as limiting the scope of the present application. If no specific techniques or conditions are specified in the examples, the techniques or conditions described in the literatures in the art or in accordance with the product specification shall be followed. Reagents or instruments used without indicating manufacturers are all commercially available conventional products.

### Example 1

Preparation of the first positive electrode active material:
(1) Preparation of Fe, Co, V and S Co-doped manganese oxalate
   689.6 g of manganese carbonate, 455.27 g of ferrous carbonate, 4.65 g of cobalt sulfate, and 4.87 g of vanadium dichloride were added to a mixer and mixed thoroughly for 6 h to obtain a mixture, which was transferred to a reaction kettle, and 5 L of deionized water and 1260.6 g of oxalic acid dihydrate were added, heated to 80 °C, fully stirred at a rotation speed of 500 rpm for 6 h and mixed uniformly until the reaction was terminated and no bubbles were generated, to obtain a suspension of Fe, Co and V co-doped manganese oxalate. The suspension was then filtered, dried at 120 °C, and sand-milled to obtain manganese oxalate particles with a particle size of 100 nm.
(2) Preparation of Li_{0.997}Mn_{0.60}Fe_{0.393}V_{0.004}Co_{0.003}P_{0.997}S_{0.003}O₄
   1793.1 g of manganese oxalate prepared in (1), 368.3 g of lithium carbonate, 1146.6 g of ammonium dihydrogen phosphate and 4.9 g of dilute sulfuric acid were added to 20 L of deionized water, stirred well, and uniformly mixed and reacted at 80 °C for 10 h, to obtain a slurry. The slurry was transferred to a spray drying device for spray drying and granulation to obtain a powder. Under a protective atmosphere (90% nitrogen and 10% hydrogen), the powder was sintered in a roller kiln at 700 °C for 4 h to obtain the first positive electrode active material.

### Example 10:

Preparation of the first positive electrode active material;
(1) Preparation of Fe, Co, V and S Co-doped manganese oxalate
   689.6 g of manganese carbonate, 455.27 g of ferrous carbonate, 4.65 g of cobalt sulfate, and 4.87 g of vanadium dichloride were added to a mixer and mixed thoroughly for 6 h to obtain a mixture, which was transferred to a reaction kettle, and 5 L of deionized water and 1260.6 g of oxalic acid dihydrate were added, heated to 80 °C, fully stirred at a rotation speed of 500 rpm for 6 h and mixed uniformly until the reaction was terminated and no bubbles were generated, to obtain a suspension of Fe, Co and V co-doped manganese oxalate. The suspension was then filtered, dried at 120 °C, and sand-milled to obtain manganese oxalate particles with a particle size of 100 nm.
(2) Preparation of primary particles
   1793.1 g of manganese oxalate prepared in (1), 368.3 g of lithium carbonate, 1146.6 g of ammonium dihydrogen phosphate and 4.9 g of dilute sulfuric acid were added to 20 L of deionized water, stirred well, and uniformly mixed and reacted at 80 °C for 10 h, to obtain a slurry. The slurry was transferred to a spray drying device for spray drying and granulation to obtain a powder. Under a protective atmosphere (90% nitrogen and 10% hydrogen), the powder was sintered in a roller kiln at 700°C for 3 h to obtain the primary particles.
(3) Preparation of Li_{0.997}Mn_{0.60}Fe_{0.393}V_{0.004}Co_{0.003}P_{0.997}S_{0.003}O₄
   The primary particles were spray dried to form a monodispersed primary particle powder after evaporation of the solvent. Under a nitrogen protective atmosphere, the powder was sintered in a roller kiln at 800 °C for 2 h to obtain the first positive electrode active material.

The first positive electrode active materials in Examples 2-9, Examples 19-27 and Comparative Example 1 are the same as the first positive electrode active material in Example 1, and the first positive electrode active materials in Examples 11-18, Examples 28-36 and Comparative Example 2 are the same as the first positive electrode active material in Example 10.

The second positive electrode active materials in Examples 1-36 and Comparative Examples 3-4 are all commercially available materials from Ningbo Ronbay New Energy Technology Co., Ltd. The second positive electrode active material in Example 1 is LiNi_{0.55}Co_{0.05}Mn_{0.4}O₂, and the second positive electrode active material in Example 10 is LiNi_{0.8}Co_{0.1}Mn_{0.1}O₂.

The second positive electrode active materials in Examples 2-9, Examples 28-36 and Comparative Example 3 are the same as the second positive electrode active material in Example 1, and the second positive electrode active materials in Examples 10-18, Examples 19-27 and Comparative Example 4 are the same as the second positive electrode active material in Example 10.

The positive electrode active materials in Comparative Examples 1 and 2 comprise only the first positive electrode active material, and the positive electrode active materials in Comparative Examples 3 and 4 comprise only the second positive electrode active material.

The first positive electrode active materials and the second positive electrode active materials in Examples 1-36 and Comparative Examples 1-4 were tested as follows:
1. Determination of chemical formula: ICP was used to confirm the mass fraction of each element, then the mass of each element could be obtained by testing the sample mass by ICP, and then the molar amount could be confirmed by the molar mass of each element, and finally the chemical formula was obtained by calculation.
2. Gram capacity test: the positive electrode active material to be tested was assembled into a button battery for testing, the button battery was charged to 4.3 V at 0.1 C, and then charged at a constant voltage of 4.3 V, until the current was less than or equal to 0.05 mA, left standing for 5 min, and then discharged to 2.0 V at 0.1 C, and the discharge capacity at this time was the gram capacity.
3. Discharge voltage plateau test: the positive electrode active material to be tested was assembled into a button battery for gram capacity test, and the discharge voltage plateau could be calculated by the formula: discharge voltage plateau = discharge energy/discharge capacity.
4. Compacted density test: 5 g powder was placed in a special compaction mold (American CARVER mold, model 13mm), and then the mold was placed on a compacted density instrument. A pressure of 3T was applied, the thickness of the powder under the pressure (thickness after pressure relief) was read on the device, and the compacted density was calculated by ρ=m/v. The area value used therein was a standard small picture area of 1540.25mm².
5. Particle size test: it could be measured using a laser particle size analyzer (such as Malvern Master Size 3000) with reference to the standard GB/T 19077-2016.

The test results show that:
The first positive electrode active materials in Examples 1-9, Examples 19-27 and Comparative Example 1 are primary particles with the chemical formula of Li_{0.997}Mn_{0.60}Fe_{0.393}V_{0.004}Co_{0.003}P_{0.997}P_{0.003}O₄, the Dv50 particle size of the primary particles is 670 nm, the gram capacity is 142 mAh/g, the discharge voltage plateau is 3.73 V, and the compacted density is 2.31g/cm³.

The first positive electrode active materials in Examples 10-18, Examples 28-36 and Comparative Example 2 are secondary particles with the chemical formula of Li_{0.997}Mn_{0.60}Fe_{0.393}V_{0.004}Co_{0.003}P_{0.997}S_{0.003}O₄, the Dv50 particle size of the secondary particles is 3.8µm, the Dv50 particle size of the primary particles of the secondary particles is 230 nm, the gram capacity is 144mAh/g, the discharge voltage plateau is 3.73 V, and the compacted density is 1.87g/cm³.

The second positive electrode active materials in Examples 1-9, Examples 28-36 and Comparative Example 3 are primary particles with the chemical formula of LiNi_{0.55}Co_{0.05}Mn_{0.4}O₂, the Dv50 particle size of the primary particles is 3000 nm, the gram capacity is 170 mAh/g, the discharge voltage plateau is 3.88 V, and the compacted density is 3.12g/cm³.

The second positive electrode active materials in Examples 10-18, Examples 19-27 and Comparative Example 4 are secondary particles with the chemical formula of LiNi_{0.8}Co_{0.1}Mn_{0.1}O₂, the Dv50 particle size of the secondary particles is 9.1µm, the Dv50 particle size of the primary particles of the secondary particles is 500 nm, the gram capacity is 200 mAh/g, the discharge voltage plateau is 3.82 V, and the compacted density is 3.21g/cm³.

The positive electrode active materials in Examples 1-36 and Comparative Examples 1-4 were used to prepare batteries, and the specific steps were as follows:
Preparation of the positive electrode plate: the positive electrode active material, polyvinylidene fluoride (PVDF) and conductive carbon were added to a certain amount of N-methylpyrrolidone (NMP) with the mass ratio of the positive electrode active material : binder : conductive agent being 90 : 5 : 5, and stirred in a drying room to make a uniform positive electrode slurry, the viscosity was controlled to be 3000 Pa-S-10000 mPa·S, the above positive electrode slurry was coated on an aluminum foil and dried to obtain the positive electrode plate. Here, the mass fraction of the first positive electrode active material and the mass fraction of the second positive electrode active material in the positive electrode active material are shown in Table 1.

Preparation of the negative electrode plate: graphite, sodium carboxymethyl cellulose (CMC), styrene-butadiene rubber (SBR) and conductive carbon were added to a certain amount of deionized water with the mass ratio of graphite : sodium carboxymethyl cellulose : styrene-butadiene rubber : conductive agent being 90 : 2 : 3 : 5, and stirred to make a uniform negative electrode slurry, the viscosity was controlled to be 3000 Pa·S-10000 mPa·S, the above negative electrode slurry was coated on a copper foil and dried to obtain the negative electrode plate.

The prepared positive electrode plate, negative electrode plate and separator (polyethylene (PE) porous polymer film) were fabricated into a corresponding battery cell according to a Z-shaped laminated structure, and the battery cell was vacuum-dried at 90 °C for 12 h, and then a positive electrode tab and a negative electrode tab were ultrasonically welded; the positive electrode used an aluminum tab, the negative electrode used a nickel tab, and the positive electrode tab and the negative electrode tab were located on the same side of the battery cell; after welding the tab, the battery cell was placed in an aluminum-plastic film of a suitable size for top-side sealing encapsulation, and the top-side sealing temperature was 145 °C; an electrolyte was injected (the electrolyte solution was a mixed solution of 1 mol/L LiPF₆ solution and 5 wt.% fluoroethylene carbonate (FEC), wherein the solvent of the LiPF₆ solution was ethylene carbonate (EC) : diethyl carbonate (DEC) : dimethyl carbonate (DMC) in a volume ratio of 1 : 1 : 1, and a well-prepared soft-pack laminated battery was obtained after left standing, formation, aging, venting, secondary sealing, and capacity testing.

The following performance tests were performed on the batteries prepared in Examples 1-36 and Comparative Examples 1-4, and the test results are shown in Table 1:
1. Compacted density test of the positive electrode plate: at room temperature, the weight ml of a 10mm² round disc used to prepare the current collector was weighed out first, and a current collector with a thickness of d1 was measured out, and then a cold-pressed positive electrode plate with a size of 10 m (length) * 200 mm (width) was taken (there were positive electrode active material layers on both sides of the current collector). Starting from one end of the electrode plate, 10mm² round discs were taken from the middle positions of the electrode plates at lengths of 1 m, 3 m, 5 m, 7 m and 9 m respectively, and the weights of the small round discs were weighed respectively and recorded as m2, m3, m4, m5 and m6; the thicknesses of the small round discs were measured respectively and recorded as d2, d3, d4, d5 and d6, and compacted density = ((m2+m3+m4+m5+m6)/5/10-m1/10)/((d2+d3+d4+d5+d6)/5-d1)*1000, wherein m was in g/mm², and d was in mm.
2. Cycle life test: in a constant temperature environment of 25 °C and at 2.5~4.4 V, the prepared soft-pack laminated battery was charged at 0.5C0 to 4.4 V, and then charged at a constant voltage of 4.4 V, until the current was ≤0.05C0, left standing for 5 min, and then discharged at 1C0 to 2.5 V, the capacity was recorded as Cn (n=1,2,3...), and the above operations were repeated, the capacity retention rate was calculated according to the ratio of Cn/C3, and when Cn/C3×100%=80%, the corresponding number of cycles was extracted as the examination index of cycling ability.
3. Thermal runaway temperature test: the soft-pack laminated battery was placed in a high temperature box, the temperature was raised from 25°C to 100°C at 5 °C/min for 1 h, and subsequently the temperature was raised at 5 °C/min; the temperature was maintained for 30 min every time it was raised by 5 °C, the test was stopped when the temperature was raised to 200 °C or the battery cell ran away, and the environment temperature at the time of thermal runaway was recorded.

**Table 1**

| No. | Positive electrode active material | | | | Compacted density of positive electrode plate/(g/cm³) | Cycling number/(cycles) | Thermal runaway temperature/(°C) |
|---|---|---|---|---|---|---|---|
| | Mass fraction of first positive electrode active material/(wt%) | Mass fraction of second positive electrode active material/(wt%) | Dv10 /(µm) | Dv90 /(µm) | | | |
| Example 1 | 10 | 90 | 1.731 | 7.01 | 2.5 | 1637 | 150 |
| Example 2 | 20 | 80 | 1.562 | 6.42 | 2.6 | 1746 | 150 |
| Example 3 | 30 | 70 | 1.393 | 5.83 | 2.7 | 1849 | 155 |
| Example 4 | 40 | 60 | 1.224 | 5.24 | 2.8 | 1825 | 155 |
| Example 5 | 50 | 50 | 1.055 | 4.65 | 2.9 | 1743 | 155 |
| Example 6 | 60 | 40 | 0.886 | 4.06 | 3 | 1701 | 157 |
| Example 7 | 70 | 30 | 0.717 | 3.47 | 3.1 | 1746 | 158 |
| Example 8 | 80 | 20 | 0.548 | 2.88 | 3.2 | 1342 | 158 |
| Example 9 | 90 | 10 | 0.379 | 2.29 | 3.3 | 1137 | 159 |
| Example 10 | 10 | 90 | 4.401 | 13.18 | 2.22 | 1738 | 135 |
| Example 11 | 20 | 80 | 4.002 | 12.36 | 2.34 | 1836 | 135 |
| Example 12 | 30 | 70 | 3.603 | 11.54 | 2.46 | 1904 | 135 |
| Example 13 | 40 | 60 | 3.204 | 10.72 | 2.58 | 1932 | 138 |
| Example 14 | 50 | 50 | 2.805 | 9.9 | 2.7 | 1873 | 138 |
| Example 15 | 60 | 40 | 2.406 | 9.08 | 2.82 | 1742 | 140 |
| Example 16 | 70 | 30 | 2.007 | 8.26 | 2.94 | 1621 | 141 |
| Example 17 | 80 | 20 | 1.608 | 7.44 | 3.06 | 1431 | 143 |
| Example 18 | 90 | 10 | 1.209 | 6.62 | 3.18 | 1146 | 145 |
| Example 19 | 10 | 90 | 4.341 | 12.77 | 2.49 | 2161 | 136 |
| Example 20 | 20 | 80 | 3.882 | 11.54 | 2.58 | 2131 | 136 |
| Example 21 | 30 | 70 | 3.423 | 10.31 | 2.67 | 2276 | 136 |
| Example 22 | 40 | 60 | 2.964 | 9.08 | 2.76 | 2218 | 138 |
| Example 23 | 50 | 50 | 2.505 | 7.85 | 2.85 | 2109 | 139 |
| Example 24 | 60 | 40 | 2.046 | 6.62 | 2.94 | 2003 | 141 |
| Example 25 | 70 | 30 | 1.587 | 5.39 | 3.03 | 1994 | 141 |
| Example 26 | 80 | 20 | 1.128 | 4.16 | 3.12 | 1431 | 142 |
| Example 27 | 90 | 10 | 0.669 | 2.93 | 3.21 | 1332 | 143 |
| Example 28 | 10 | 90 | 1.791 | 7.42 | 2.23 | 1536 | 149 |
| Example 29 | 20 | 80 | 1.682 | 7.24 | 2.36 | 1592 | 149 |
| Example 30 | 30 | 70 | 1.573 | 7.06 | 2.49 | 1573 | 153 |
| Example 31 | 40 | 60 | 1.464 | 6.88 | 2.62 | 1627 | 153 |
| Example 32 | 50 | 50 | 1.355 | 6.7 | 2.75 | 1631 | 154 |
| Example 33 | 60 | 40 | 1.246 | 6.52 | 2.88 | 1503 | 155 |
| Example 34 | 70 | 30 | 1.137 | 6.34 | 3.01 | 1522 | 155 |
| Example 35 | 80 | 20 | 1.028 | 6.16 | 3.14 | 1045 | 156 |
| Example 36 | 90 | 10 | 0.919 | 5.98 | 3.27 | 987 | 157 |

In Comparative Examples 1 and 2, the mass fraction of the first positive electrode active material was 100 wt%, and the mass fraction of the second positive electrode active material was 0 wt%; In Comparative Examples 3 and 4, the mass fraction of the second positive electrode active material was 100 wt%, and the mass fraction of the first positive electrode active material was 0 wt%.

The test results show that the compacted densities of the positive electrode plates in Examples 1-36 were higher than the compacted densities of the positive electrode plates in Comparative Examples 1 and 2, the cycle lives of the batteries in Examples 1-36 were better than the cycle lives of the batteries in Comparative Examples 1-4, and the thermal runaway temperatures of the batteries in Examples 1-36 were higher than the thermal runaway temperatures of the batteries in Comparative Examples 1-4.

In the description of the present application, the terms "first" and "second" are used for descriptive purposes only, and cannot be construed as indicating or implying relative importance or implicitly indicating the number of technical features indicated. "First feature" and "second feature" may comprise one or more such feature.

In the present application, whether or not the words "approximately" or "about" are used, all numbers disclosed here are approximate values. The value of each number may vary by less than 10% or a reasonable difference considered by those skilled in the art, such as 1%, 2%, 3%, 4% or 5%.

In the description of the present application, "A and/or B" may include the case of A alone, the case of B alone, and any of the cases of A and B, wherein A and B are used only for illustration, and may be any technical features connected using "and/or" in the present application.

In the description of this specification, the reference terms "one embodiment", a description with reference to the terms "one embodiment", "another embodiment", or the like means that a specific feature, structure, material, or characteristic described in connection with the embodiment is included in at least one embodiment of the present application. In this specification, the schematic representation of the above terms does not necessarily refer to the same embodiment or example. Moreover, the specific features, structures, materials, or characteristics described may be combined in any one or more embodiments or examples in a suitable manner. In addition, those skilled in the art can integrate and combine different embodiments or examples as well as features of different embodiments or examples described in the present application without contradicting each other.

Although the embodiments of the present application have been shown and described above, it is to be understood that the above embodiments are exemplary, and cannot be construed as limiting the present application, and those skilled in the art can make changes, modifications, substitutions and variations to the above embodiments within the scope of the present application.

## Claims

1. A positive electrode active material comprising:
a first positive electrode active material comprising lithium manganese phosphate;
a second positive electrode active material different from the first positive electrode active material,
wherein the lithium manganese phosphate has a doping element satisfying at least one of the following conditions:
the ion radius of the doping element and the ion radius of manganese element satisfy that |a-b|/b is not greater than 10%, wherein a is the ion radius of the doping element, and b is the ion radius of the manganese element;
the valence variation voltage of the doping element is U, and 2V<U<5.5V;
the chemical activity of the chemical bond formed by the doping element and O is not less than the chemical activity of P-O bond; and
the highest valence of the doping element is not greater than 6.

2. The positive electrode active material according to claim 1, wherein the gram capacity of the second positive electrode active material is not less than the gram capacity of the first positive electrode active material.

3. The positive electrode active material according to claim 1 or 2, wherein the gram capacity of the first positive electrode active material is 135 mAh/g-150 mAh/g, and the gram capacity of the second positive electrode active material is 170 mAh/g-230 mAh/g.

4. The positive electrode active material according to any one of claims 1-3, wherein the discharge voltage plateau of the positive electrode active material is not greater than the discharge voltage plateau of the second positive electrode active material.

5. The positive electrode active material according to any one of claims 1-4, wherein the discharge voltage plateau of the first positive electrode active material is not greater than the discharge voltage plateau of the second positive electrode active material.

6. The positive electrode active material according to any one of claims 1-5, wherein the discharge voltage plateau of the first positive electrode active material is 3.70 V-3.80 V, and the discharge voltage plateau of the second positive electrode active material is 3.80 V-3.90 V.

7. The positive electrode active material according to any one of claims 1-6, wherein under a pressure of 3T, the compacted density of the positive electrode active material is not less than the compacted density of the first positive electrode active material.

8. The positive electrode active material according to any one of claims 1-7, wherein under a pressure of 3T, the compacted density of the first positive electrode active material is not greater than the compacted density of the second positive electrode active material.

9. The positive electrode active material according to any one of claims 1-8, wherein under a pressure of 3T, the compacted density of the first positive electrode active material is 1.8g/cm³-2.5g/cm³; and under a pressure of 3T, the compacted density of the second positive electrode active material is 3.0g/cm³-3.4g/cm³.

10. The positive electrode active material according to any one of claims 1-9, wherein at a temperature of 25 °C, the electronic conductivity of the second positive electrode active material is not less than the electronic conductivity of the first positive electrode active material.

11. The positive electrode active material according to any one of claims 1-10, wherein the first positive electrode active material is a secondary particle, the Dv50 particle size of the secondary particle of the first positive electrode active material is 2 µm-9 µm, and the Dv50 particle size of primary particle of the first positive electrode active material is 10 nm-600 nm.

12. The positive electrode active material according to any one of claims 1-10, wherein the first positive electrode active material is a primary particle, and the Dv50 particle size of the primary particle of the first positive electrode active material is 500 nm-1200 nm.

13. The positive electrode active material according to any one of claims 1-12, wherein the second positive electrode active material is a secondary particle, the Dv50 particle size of the secondary particle of the second positive electrode active material is 7 µm-11 µm, and the Dv50 particle size of primary particle of the second positive electrode active material is 50 nm-800 nm.

14. The positive electrode active material according to any one of claims 1-12, wherein the second positive electrode active material is a primary particle, and the Dv50 particle size of the primary particle of the second positive electrode active material is 3000 nm-5000 nm.

15. The positive electrode active material according to any one of claims 1-14, wherein the mass fraction of the first positive electrode active material in the positive electrode active material is 10 wt%-90 wt%.

16. The positive electrode active material according to any one of claims 1-15, wherein the mass fraction of the second positive electrode active material in the positive electrode active material is 10 wt%-90 wt%.

17. The positive electrode active material according to any one of claims 1-16, wherein the Dv90 particle size of the positive electrode active material is 0.9 µm-8 µm, and the Dv10 particle size of the positive electrode active material is 0.2 µm-3.0 µm.

18. The positive electrode active material according to any one of claims 1-16, wherein the Dv90 particle size of the positive electrode active material is 0.9 µm-18 µm, and the Dv10 particle size of the positive electrode active material is 0.2 µm-7.0 µm.

19. The positive electrode active material according to any one of claims 1-16, wherein the Dv50 particle size of the positive electrode active material is 0.5 µm-10 µm.

20. The positive electrode active material according to any one of claims 1-19, wherein the mass fraction of manganese element in the positive electrode active material is 10 wt%-21 wt%.

21. The positive electrode active material according to any one of claims 1-20, wherein the ratio of the mass fraction of the manganese element to the mass fraction of cobalt element in the positive electrode active material is (10:5)-(21:0.4).

22. The positive electrode active material according to any one of claims 1-21, wherein the ratio of the mass fraction of the manganese element to the mass fraction of nickel element in the positive electrode active material is (10:30)-(21:6).

23. The positive electrode active material according to any one of claims 1-22, wherein the ratio of the mass fraction of the manganese element to the mass fraction of iron element in the positive electrode active material is (10:13)-(21:0.8).

24. The positive electrode active material according to any one of claims 1-23, wherein the ratio of the mass fraction of the manganese element to the mass fraction of the iron element in the first positive electrode active material is (6:4)-(7:3).

25. The positive electrode active material according to any one of claims 1-24, wherein the doping element comprises one or both of a first doping element and a second doping element, the first doping element is doped at manganese site, and the second doping element is doped at phosphorus site,
wherein the first doping element satisfies at least one of the following conditions:
the ion radius of the first doping element and the ion radius of the manganese element satisfy that |a-b|/b is not greater than 10%, wherein a is the ion radius of the first doping element, and b is the ion radius of the manganese element;
the valence variation voltage of the first doping element is U, and 2V<U<5.5V,
wherein the second doping element satisfies at least one of the following conditions:
the chemical activity of the chemical bond formed by the second doping element and O is not less than the chemical activity of P-O bond; and
the highest valence of the second doping element is not greater than 6.

26. The positive electrode active material according to claim 25, wherein at least two kinds of the first doping element are contained.

27. The positive electrode active material according to claim 25 or 26, wherein the first doping element comprises one or more elements of Zn, Al, Na, K, Mg, Mo, W, Ti, V, Zr, Fe, Ni, Co, Ga, Sn, Sb, Nb and Ge.

28. The positive electrode active material according to any one of claims 25-27, wherein the second doping element comprises one or more elements of B (boron), S, Si and N.

29. The positive electrode active material according to any one of claims 1-28, wherein the second positive electrode active material comprises at least one of optionally doped lithium cobalt oxide, optionally doped lithium manganate, optionally doped nickel-cobalt ternary material and optionally doped lithium iron phosphate.

30. The positive electrode active material according to claim 29, wherein the lithium cobalt oxide satisfies the general formula Li_{1+z}Co_{1-x-y}MaₓMb_{y}O₂,
wherein 0≤x≤0.01, 0≤y≤0.01, and -0.05≤z≤0.08;
the Ma comprises a doped constant valence element, and the Ma comprises at least one of Al, Ga, Hf, Mg, Sn, Zn and Zr; the Mb comprises a doped variable valence element, and the Mb comprises at least one of Ni, Mn, V, Mo, Nb, Cu, Fe, In, W and Cr.

31. The positive electrode active material according to claim 29, wherein the lithium manganate satisfies the general formula LiₐMn_{2-b}M_{b}O_{4-c}X_{c},
wherein 0.9≤a≤1.2, 0≤b≤0.2, and 0≤c≤0.2;
M and X are doping elements, M comprises at least one of Li, Cr, Co, Ni, Mg, Ca, Sr, Ba, Na, K, Al, Be, B, Ti, Zr, Cu, Zn, Ga, Sn and V; and the doping element X comprises at least one of F, Cl, Br, I or S.

32. The positive electrode active material according to claim 29, wherein the nickel-cobalt ternary material satisfies the general formula LiₐNi_{b}Co_{c}M1_{d}M2_{c}O_{f}R_{g},
wherein 0.75≤a≤1.2, 0<b<1, 0<c<1, 0<d<1, 0≤e≤0.2, 1≤f≤2.5, 0≤g≤1, and f+g≤3;
M1 comprises Mn and/or Al, M2 comprises at least one of Zr, Zn, Cu, Cr, Mg, Fe, V, Ti, Sr, Sb, Y, W and Nb, and R comprises at least one of N, F, S and Cl.

33. The positive electrode active material according to claim 29, wherein the lithium iron phosphate satisfies the general formula LiFe_{α}M_{β}PO₄,
wherein 0.2≤a<1, and 0<b≤0.8; and
M comprises one of Ti, Mg, V, Mn, Cr, Zr, Nb and W.

34. The positive electrode active material according to any one of claims 1-33, wherein the energy density of a film layer formed when the positive electrode active material is provided on the surface of a positive electrode current collector is not less than the energy density of a film layer formed when the first positive electrode active material is provided on the surface of the positive electrode current collector.

35. A positive electrode slurry comprising the positive electrode active material according to any one of claims 1-34.

36. A positive electrode plate comprising a positive electrode current collector and a positive electrode active material layer located on at least one side surface of the positive electrode current collector, wherein the positive electrode active material layer comprises the positive electrode active material according to any one of claims 1-34, and/or the positive electrode active material layer is formed by using the positive electrode slurry according to claim 35.

37. The positive electrode plate according to claim 36, wherein the mass fraction of manganese element in the positive electrode active material layer is 10 wt%-21 wt%.

38. The positive electrode plate according to claim 36 or 37, wherein the ratio of the mass fraction of manganese element to the mass fraction of cobalt element in the positive electrode active material layer is (10:5)-(21:0.4).

39. The positive electrode plate according to any one of claims 36-38, wherein the ratio of the mass fraction of manganese element to the mass fraction of nickel element in the positive electrode active material layer is (10:30)-(21:6).

40. The positive electrode plate according to any one of claims 37-39, wherein the ratio of the mass fraction of manganese element to the mass fraction of iron element in the positive electrode active material layer is (10:13)-(21:0.8).

41. The positive electrode plate according to any one of claims 36-40, wherein a region with an area of 1×10⁻⁴cm² is included, the region is located on one side surface of the positive electrode active material layer away from the positive electrode current collector, and the amount of the first positive electrode active material within the region is not less than the amount of the second positive electrode active material.

42. A battery comprising the positive electrode active material according to any one of claims 1-34, and/or the positive electrode plate according to any one of claims 36-41.

43. An electrical apparatus comprising the positive electrode active material according to any one of claims 1-34, and/or the positive electrode plate according to any one of claims 36-41, and/or the battery according to claim 42.
